**Europäisches Patentamt**

**European Patent Office**

**Office européen des brevets**

(19)

(11) Publication number : **0 460 270 B1**

## (12) EUROPEAN PATENT SPECIFICATION

(45) Date of publication of patent specification :
**26.08.92 Bulletin 92/35**

(51) Int. Cl.⁵ : **G09B 3/04,** G09B 19/00,
B41M 3/00, C09D 11/00

(21) Application number : **90110869.6**

(22) Date of filing : **08.06.90**

(54) **Color changing print.**

(43) Date of publication of application :
**11.12.91 Bulletin 91/50**

(45) Publication of the grant of the patent :
**26.08.92 Bulletin 92/35**

(84) Designated Contracting States :
**DE ES FR GB IT**

(56) References cited :
**DE-A- 1 956 143
DE-A- 2 030 207
GB-A- 2 074 943
US-A- 3 650 046
US-A- 4 198 445
US-A- 4 907 903**

(73) Proprietor : **Kawashima, Kiyoharu
5-7, Esakacho 5-chome
Suita-shi Osaka-fu (JP)**

(72) Inventor : **Kawashima, Kiyoharu
5-7, Esakacho 5-chome
Suita-shi Osaka-fu (JP)**

(74) Representative : **Türk, Gille, Hrabal
Brucknerstrasse 20
W-4000 Düsseldorf 13 (DE)**

## Description

The present invention relates to a color changing print which enables attractive education and entertainments by including colors printed by using plural inks containing color changing agents which change from colorlessness to different colors by action of color formers. Such a color changing print is described in the preamble of claim 1.

A variety of colorful books are published in the market, and even a small child can now acquire sense of color and shape through these books. For example, most knowledge on specific shapes of flowers and animals and knowledge related to colors are acquired through such books which are printed in their original colors. However, since the acquisition of knowledge from books through the eyes requires neither imagination nor judgement at readers' side, it lacks stimulus and appeal, thus, being less effective.

In US-A-4 198 445 or DE-A-1 956 143 there are described color changing prints of the kind referred to above comprising a latent image printing and/or a latent image development system.

There is disclosed a latent image printing which is printed by an ink containing a color changing agent such as phenolphthalein or the like and a color former such as an alkaline reactant solution. The ink on the printing changes from an invisible stage to a visible stage by applying a liquefied color former on the printing, thereby improving the element of surprise so as to heighten the effect of the understanding. However the prior art color former is liquid and has to be prepared and provided separately and for some colors in differing compositions so that there are arise difficulties as to dosing. Furtheron the color former is generally stored as a liquid in the applicator together with the dissolvent. Therefore if the applicator is lost, the dissolvent is drying up or the color former becomes empty, so that the print is getting useless.

Thus a primary object of the invention is to provide a color changing print overcoming the above-mentioned problems and difficulties with which the acquisition of knowledge on shapes and colors of things, developing thought and judgement are enhanced and the preparation thereof is simplified.

The features of the present invention are specified in claim 1. Preferred embodiments are subject of subclaims.

As the change of color is caused by applying a color former, it needs no heater and is operated safely. Furtheron an easily available solvent, water, is used. If the color changing print comprises plural color changing areas, a variety of colors and their mixtures may be generated, resulting in colorful expressions, which allows delicate education on shapes and colors. Moreover, since colors are generated by readers themselves, each color is generated in different time, which develops readers imagination and judgement and gives them strong impressions with the displayed shapes and colors, resulting in an effective and rememberable color education.

An embodiment of the present invention will now be describe by way of example, referring to the attached drawings, in which;

Figs. 1(a) and (b) are front views showing one of the embodiments of the invention,

Figs. 2(a) to (c) are front views showing another embodiment, and

Figs. 3(a) and (b) are front views showing still another embodiment.

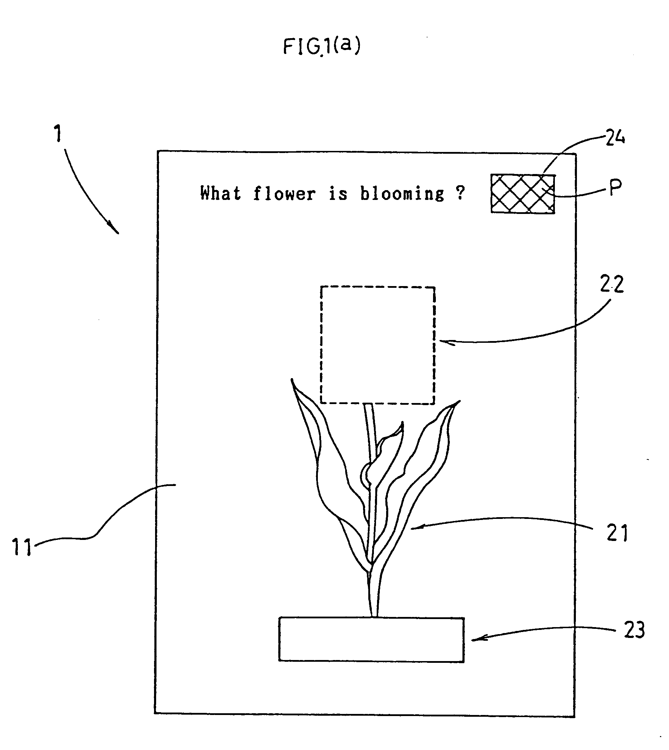

In Figs. 1(a) and 1(b), a color changing print 1 of the invention is formed as an educational sheet 11 which shows a part of an object, allowing to learn considering its entire shape, name and colors of its major parts.

In Fig. 1(a), a stem and leaves 21 of a tulip are shown in visible colors, and above it is a color changing area Q framed by a visible dotted line 22, which is printed, by using a color changing material invisible when printed and a shape of a flower in purple, yellow or red, for example, is displayed by applying a color former on almost the entire color changing ared. Below it is printed, in letters, the name of the flower, "TULIP", by using a color changing agent, which is framed with a visible line 23, and the letters become visible by applying a color former onto the color changing area Q. Fig. 1(b) shows the state after colors are developed by the color former.

Color changing agents and color formers used for the embodiment are described below.

Here a pH indicator agent having a colorless pH range can be used as a color changing agent. For such pH indicator agents, there are $\gamma$-dinitrophenol, m-nitrophenol, o-nitrophenol, $\rho$-nitrophenol, cyanine, $\alpha$-naphthol phthalein, phenol phthalein, cresol phthalein, thymol phthalein, ethyl bis-acetic acid, bromphenol purple, hexamethoxy acid, heptamethoxy acid and so forth, which can be used according to the colors to be displayed. Mixed agents of plural types can be used as well as a monocomponent agent.

For color formers there are acid, alkaline or neutral combinations or their solutions, which can control pH value and have alkaline pH values between pH 7 and 14, such as ammonia, monoethanol amine, ethyl amines, propyl amines, 2-ethyl-hexyl-oxypropyl amine, 3-ethoxipropyl amine, diisobutyl amine, sec-butyl amine, isopropanol amine, ethanol amines, 2-ethylhexyl amine and ethylene amines. There are also acetic acid and formic acid as examples of color formers having acid pH value between pH 1 and 7.

In this invention, in order to obtain clear color changing and to prevent discoloring, it is preferable to use water-solute polyhydric alcohol of about 5 to 50 weight percent in concentration, such as ethylene glycol, propylene glycol, polyethylene glycol and glycerol, together with color changing agent or color former.

The material of color former and its concentration are determined by the pH value at which the color changing agent develops a color. As for color formers which develop colors in a pH range close to neutrality, such as nitrophenols, pH values of color reactor ink vehicles are priorly arranged to be low by nonvolatile pH regulator such as diluted sulfuric acid and tartaric acid. This helps to prevent colors from changing after printing.

A color changing agent is prepared as an ink and generally controlled to be in colorless state. It is also possible to prepare to become colorless by drying after printing.

In order to prepare a color changing agent as a color changing ink, a solvent for a color changing agent, such as an alcohols, is used, to which are added polyhydric alcohol, surface active agent and different resins. Developing colors could be effected by using a color former dissolved in water or alcohol, after printing. In accordance with the invention a water-soluble color changing agent is used. As additives to make water-soluble color changing ink vehicles, dimethyl sulfonamide, dimethyl sulfoxide, alcohols and polyhydric alcohols are used, and as viscosity intersifying agent, resin, shellac, guaiac gum, methyl cellulose and ethyl celluloses are used.

By either mixing and kneading color changing agents ground into fine grains with different types of ink vehicles or by mixing and kneading color changing agents after being dissolved in solutions and adhered to proper inorganic or organic powder with different types of ink vehicles, color developing inks can be arranged.

In printing, overlay printing is also possible using plural types of color changing inks.

In Table 1, combination examples of color changing agents and color formers which can be used for prints of this invention, pH values at which the color changing agents develop colors, i.e. color developing pH, pH values at which they discolor, i.e. discoloring pH, and kinds of colors are shown. The color developing pH is a value at which a printed portion turns the color density to become easily identifiable or legible to human eyes. The discoloring pH is a value at which it becomes in a discolored state so that it can be rarely sensed by normal naked eyes, and color changing and discoloring ranges can be selected at will between the two values. The time required to turn from discolored to colored state can be controled by such as quantity of pH regulator in color changing ink, 75 ports of denaturated alcohol, 15 ports of water, 10 ports of surface active agent and 0 to 10 ports of tartaric acid can be contained as its vehicle composition.

As for applicators used to make color formers act on such prints, there are pen type applicators such as marker pens having acrylic or polyethylene tip on the leading ends as well as so-called felt-tip pens. A container having a spongy applicator part at the leading end, a sprayer and a container containing a color former with a brush, gum or a sponge roller used to apply the agent can also form an applicator of the invention.

Thus, in Fig. 1(a), the insides of the visible frame lines 22 and 23 of the educational sheet 11 are printed by using color changing agents and color changing inks with the pH values controlled to be within the colorless pH ranges of the color changing agents.

Therefore, the insides framed with the visible frame line 22 and 23 are invisible when printed, and readers consider the specific shape of the flower, its color and the name from the stem and the leaves 21 which are visible in the educational sheet 11. Then, by applying color former inside the frames using a writing material, the color changing agents develop colors, as shown in Fig. 1(b), and display a flower of a tulip inside the visible frame line 22 in purple, for example. At the same time, inside the visible frame line 23, letters "TULIP" are generated in a visible color different from the color generated inside the visible frame line 22, in black, for example, and readers can simultaneously identify the shape of the flower, its color and the name. Thus, since the application of color formers is operated by readers' own hands, knowledges can be acquired effectively, and education is prevented from being monotonous.

Inside the visible frame line 22, it is possible to generate a color such as yellow or red, by selecting a proper color changing agent.

Moreover, as shown in Figs. 1(a) and (b), a sticker 24 is attached, on which a concentrated color former P is dried and adhered in a shape of a sheet, and by using a paint brush type applicator having a brush part containing tap water, the color former P can be dissolved and applied onto the color reacting part to develop a visible color.

For the color former P, a weak alkaline material such as sodium carbonate can preferably be adopted, since it is less dangerous.

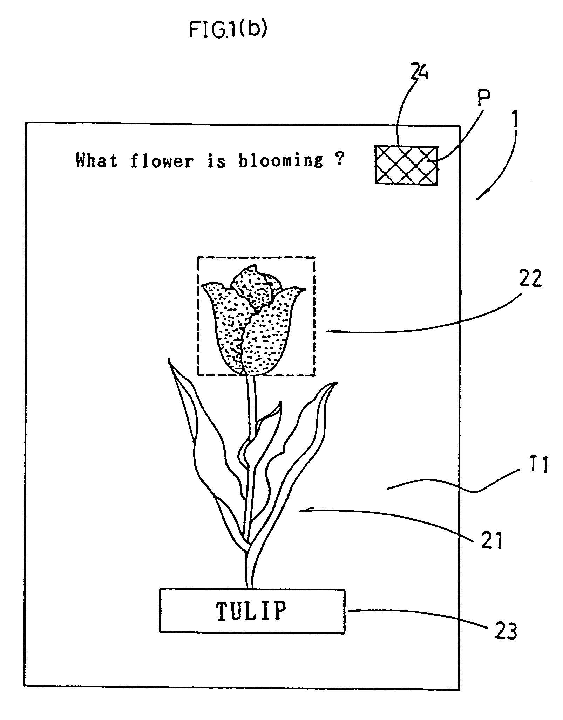

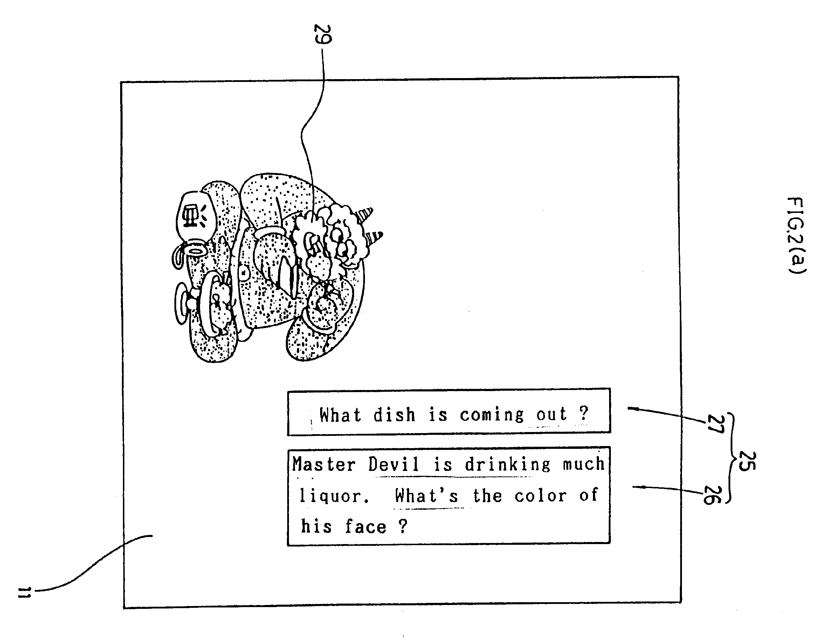

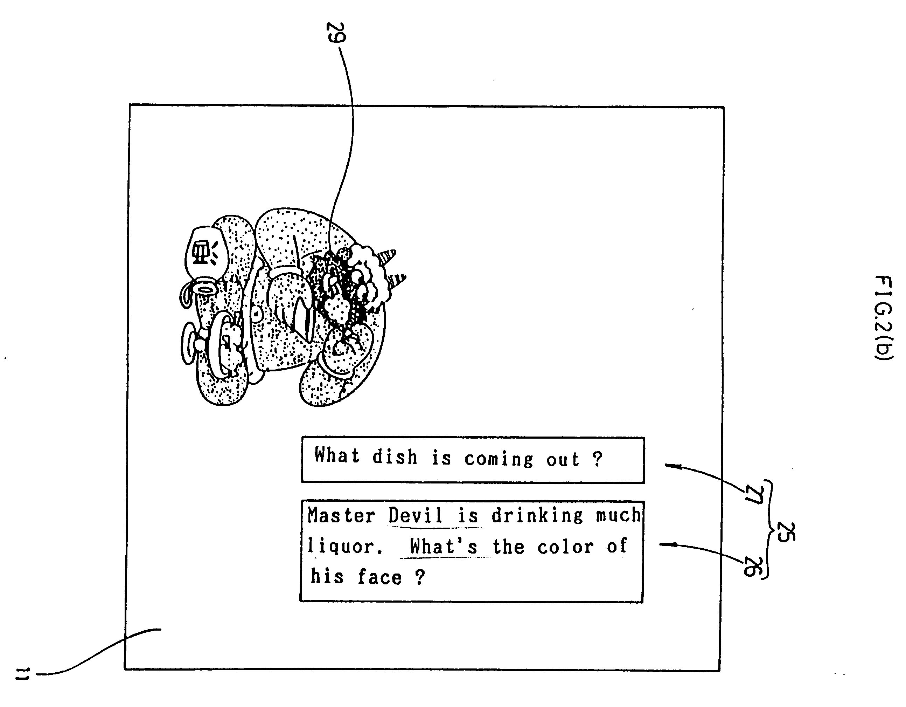

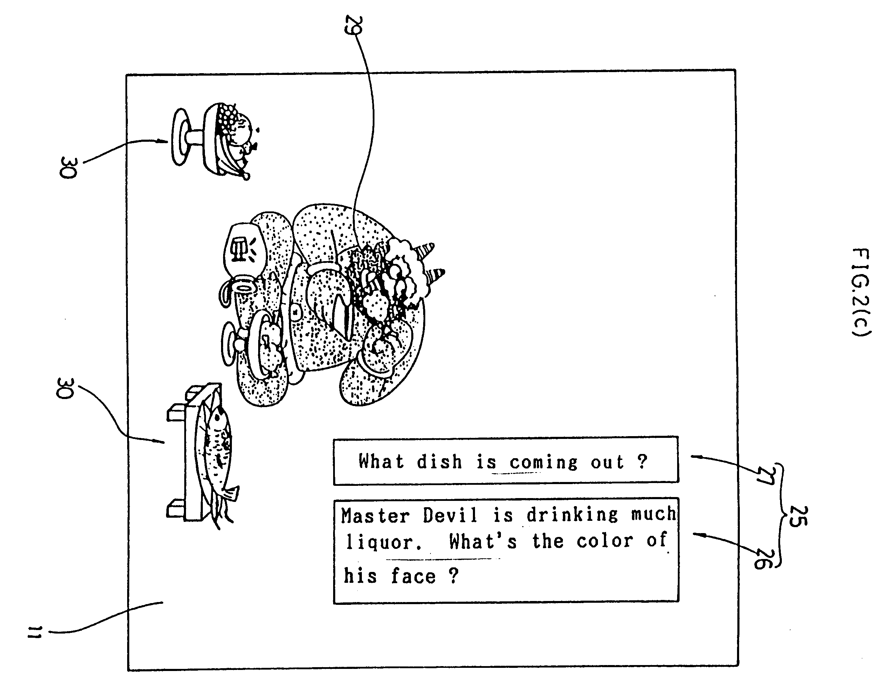

Figs. 2(a), 2(b) and 2(c) show another embodiment of the invention.

This embodiment comprises suggestion boxes 25 set in two steps, the first suggestion box 26 and the second suggestion box 27 on the sheet, in which are printed visible letters meaning to suggest to apply color formers in some of the color changing areas, and is formed to allow a systematic and step-by-step education.

As a reader applies a color former to the face, following the visible letters in the suggestion box 26, as shown in Fig. 2(b), the color former reacts to a color changing agent priorly printed on the face part 29, and changes to red, thus making the reader recognize the state under influence of liquor. By operating according to the second suggestion box 27, as shown in Fig. 2(c), dishes 30 are displayed. Such a color changing of the face part 29 and an appearance of the dishes 30 further increase the reader's interests. Upon the expression of the dishes 30, by printing with plural types of color changing agents, colorful pictures can be displayed, which further enriches effects of the education.

Moreover, such educational sheets 11 may be composed as a story-telling picture book by continually joining a plurality of sheets, and this invention may be effectively utilized in the education of infants.

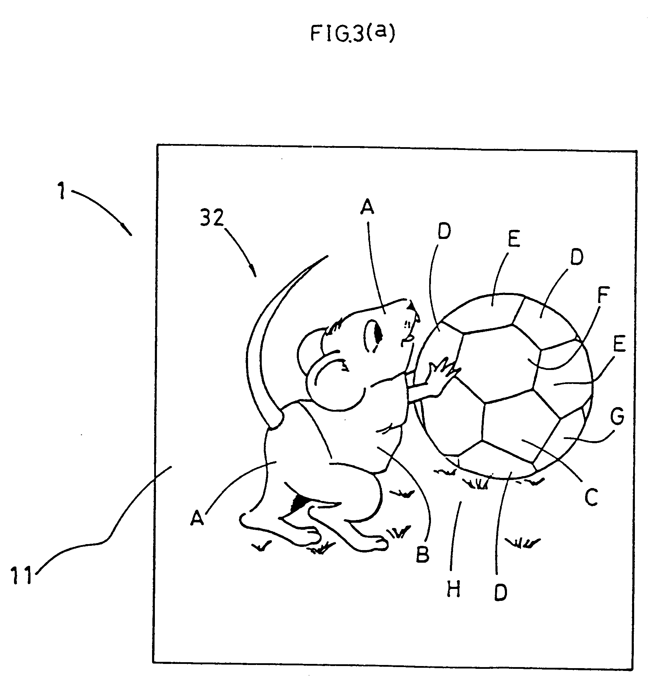

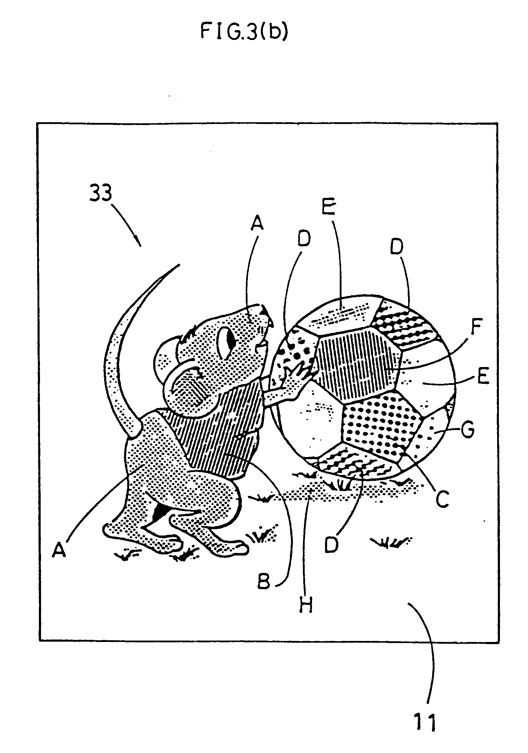

Furthermore, the invention can be formed, as shown in Figs. 3(a) and 3(b), in an original picture book. In Fig. 3(a), outlines of a line drawing 32 are drawn by using a visible printing ink, and each of parts A, B, C, D, E, F, G and H are printed invisibly upon printing by using different color changing agents.

By applying color formers onto the line drawing 32 with an applicator, each color changing agent reacts to the color former, developing a specific color, and a colorful finished picture 33 (see Fig. 3(b)) is completed.

In this embodiment, due to a lot of colors developed by the reaction to the color formers, the finished picture 33 is better in the outlook, colors do not run out the lines unlike the conventional line drawings for coloring with color pencils or crayons, and since it is easy to operate, it can be preferably adopted for child education and entertainment.

Thus, this invention can be embodied into a variety of shapes.

As described herein above, since a print of this invention comprises plural color changing areas printed by using inks containing color changing agents which changes from invisible colorlessness to corresponding visible colors by reaction with color formers, and education on detailed shapes and colors becomes possible, and since it allows a step-by-step and time-differential education, educational effects improve. In addition, since even a child can easily develop colors, it can be preferably adopted for such sheets that target children.

| Color changing agent | Content/100g | Color developing pH | Color fading pH | Color | Color former combined |
|---|---|---|---|---|---|
| γ-Dinitrophenol | 3 g | 5.8 | 4.0 | Yellow | Amines (liquid) |
| p-Nitrophenol | 3 g | 7.6 | 5.6 | Yellow | Amines (liquid), amine vapor, ammonia (liquid, vapor) |
| m-Nitrophenol | 3 g | 8.4 | 5.5 | Yellow | Amines (liquid, vapor) ammonia (liquid, vapor) |
| Cyanine | 4 g | 8.6 | 4.0 | Blue | Amines (liquid, vapor) |
| α-Naphthol phthalein | 2 g | 9.2 | 5.8 | Blue | Amines (liquid, vapor) ammonia (liquid, vapor) |
| Ethyl bis-acetic acid | 7 g | 10.5 | 7.5 | Blue | Amines (liquid) ammonia (liquid) NaOH, KOH |
| Phenol phthalein | 7 g | 10.2 | 7.5 | Reddish purple | Amines (liquid) ammonia (liquid) NaOH, KOH |
| Cresol phthalein | 5 g | 10.5 | 7.4 | Scarlet | Amines (liquid) ammonia (liquid) NaOH, KOH |
| Thymol phthalein | 6 g | 11.6 | 8.6 | Blue | ammonia (liquid) NaOH, KOH |
| Bromphenol purple | 5 g | 12.2 | 7.5 | purple | ammonia (liquid) NaOH, KOH |
| Hexamethoxy red | 2 g | 2.6 | 5.0 | Reddish purple | Nitric acid |
| Heptomethoxy red | 2 g | 4.7 | 7.5 | Red | Acetic acid |

EP 0 460 270 B1

## Claims

1. Color changing print, comprising a plurality of color changing areas printed on a sheet of paper by using inks each of which contains a color changing agent to change from substantially invisible colorlessness to a-visible corresponding color through contact with a liquefied color former applied with an applicator, said applicator having solvent for dissolving the color former, wherein said sheet of paper has a sticker adhering thereto which is provided with solidified color former, and said liquefied color former is formed by dissolving said solidified color former of the sticker by application of said solvent of the applicator of the solidified color former and wherein said solvent is water.

2. Color changing print as claimed in claim 1, characterized in that a visible frame is printed for framing the color changing areas on the sheet of paper.

3. Color changing print as claimed in claim 1 or 2, characterized in that visible letters are priorly printed on some of the color changing areas of the sheet of paper to suggest application of the color formers.

4. Color changing print as claimed in anyone of claims 1 to 3, characterized in that said applicator comprises a brush part to apply solvent to the solidified color formers.

5. Color changing print as claimed in anyone of claims 1 to 4, characterized in that the color former is a pH regulator and is one of the following materials: ammonia, monoethanol amine, ethyl amines, propyl amines, 2-ethyl-hexyl-oxypropyl amine, 3-ethoxipropyl amine, diisobutyl amine, sec-butyl amine, isopropanol amine, ethanol amines, 2-ethylhexyl amine, ethylene amines, ecetic acid and formic acid.

6. Color changing print as claimed in anyone of claims 1 to to 5, characterized in that the inks comprise color changing agents, polyhydric alcohol and surface additive agent mixed in a solvent.

7. Color changing print as claimed in claim 6, characterized in that the color changing agent is a pH indicator, and is a monocomponent agent or a mixed agent comprising one or more of γ-dinitrophenol, m-nitrophenol, o-nitrohpenol, p-nitrophenol, cyanine, α-naphthol phthalein, phenol phthalein, cresol phthalein, thymold phthalein, ethyl bis-acetic acid, bromphenol purple, hexamethoxy acid and heptamethoxy acid.

## Patentansprüche

1. Papierdrucke, in denen sich die Farben verändern lassen, umfassend eine Vielzahl von auf ein Papierblatt gedruckten Farbveränderungsflächen unter Verwendung von Tinten, von denen jede ein die Farbe veränderndes Mittel enthält, um sich von einer im wesentlichen unsichtbaren Farblosigkeit zu einer sichtbaren entsprechenden Farbe zu verändern durch Kontakt mit einem verflüssigten Farbbildner, der mit einem Applikator aufgebracht wird, wobei der Applikator ein Lösungsmittel zur Auflösung des Farbbildners enthält, worin das Papierblatt ein an ihm haftenden Aufkleber hat, der mit einem verfestigen Farbbildner versehen ist,
und der verflüssigte Farbbildner wird gebildet durch Lösen des verfestigten Farbbildners des Aufklebers durch Auftragen des Lösungsmittels des Applikators auf den verfestigten Farbbildner,
und worin das Lösungsmittel Wasser ist.

2. Papierdrucke, in denen sich die Farben verändern lassen, nach Anspruch 1, dadurch gekennzeichnet, daß zur Umrahmung der Flächen auf dem Papierblatt. in denen sich die Farben verändern lassen, eine sichtbare Umrahmung aufgedruckt ist.

3. Papierdrucke, in denen sich die Farben verändern lassen, nach Anspruch 1 oder 2, dadurch gekennzeichnet, daß auf einigen der Flächen auf dem Papierblatt, auf denen sich die Farben verändern lassen, vorher sichtbare Buchstaben aufgedruckt sind, um das Auftragen von Farbbildnern vorzuschlagen.

4. Papierdrucke, in denen sich die Farben verändern lassen, nach einem der Ansprüche 1 bis 3, dadurch gekennzeichnet, daß der Applikator einen Bürstenteil enthält, um Lösungsmittel auf die verfestigten Farbbildner aufzutragen.

5. Papierdrucke, in denen sich die Farben verändern lassen, nach einem der Ansprüche 1 bis 4, dadurch gekennzeichnet, daß der Farbbildner ein pH-Wert-Regler ist und eines der folgenden Materialien: Ammoniak, Monoethanolamin, Ethylamine, Propylamine, 2-Ethylhexyloxypropylamin, 3-Ethoxypropylamin, Diisobutylamin, sec.-Butylamin, Isopropanolamin, Ethanolamine, 2-Ethylhexylamin, Ethylenamine, Essigsäure und Ameisensäure.

6. Papierdrucke, in denen sich die Farben verändern lassen, nach einem der Ansprüche 1 bis 5, dadurch gekennzeichnet, daß die Tinten die Farbe verändernde Mittel, einen mehrwertigen Alkohol und ein oberflächenaktives Mittel im Gemisch mit einem Lösungsmittel enthalten.

7. Papierdrucke, in denen sich die Farben verändern lassen, nach Anspruch 6, dadurch gekennzeichnet, daß das die Farbe verändernde Mittel ein pH-Indikator ist und ein aus einer Komponente bestehendes Mittel oder ein Mittelgemisch ist, enthaltend eine oder mehrere der Verbindungen γ-Dinitrophenol, m-Nitrophenol, o-Nitrophenol, p-Nitrophenol, Cyanin, α-Naptholphthalein, Phenolphthalein, Cresolphthalein, Thymolphthalein, Ethyldiessigsäure, Bromphenolpurpur, Hexamethoxysäure und Heptamethoxysäure.


## Revendications

1. Imprimé changeant de couleur, comprenant une pluralité de zones changeant de couleur imprimées sur une feuille de papier en utilisant des encres dont chacune d'elle contient un agent changeant de couleur pour changer d'un état incolore,quasiment invisible,en une couleur correspondante visible par contact avec un révélateur de couleur liquéfié appliqué avec un applicateur, ledit applicateur ayant un solvant dissolvant le révélateur de couleur, dans lequel ladite feuille de papier a un papillon adhésif y adhérant qui est prévu avec un révélateur de couleur solidifié et ledit révélateur de couleur liquéfié est formé par dissolution dudit révélateur solidifié du papillon adhésif par application dudit solvant de l'applicateur du révélateur de couleur solidifié et dans lequel ledit solvant est l'eau.

2. Imprimé changeant de couleur selon la revendication 1, caractérisé en ce qu'un cadre visible est imprimé, pour encadrer les zones changeant de couleur sur la feuille de papier.

3. Imprimé changeant de couleur selon la revendication 1 ou 2, caractérisé en ce que des lettres visibles sont premièrement imprimées sur quelques-unes des zones changeant de couleur sur la feuille de papier en vue de suggérer l'application des révélateurs de couleur.

4. Imprimé changeant de couleur selon la revendication 1 ou 3, caractérisé en ce que ledit applicateur comprend une partie de brosse pour appliquer le solvant aux révélateurs de couleur solidifiés.

5. Imprimé changeant de couleur selon l'une quelconque des revendications 1 à 4, caractérisé en ce que le révélateur de couleur est un régulateur de pH et est une des substances suivantes: ammoniaque, monoéthanol amine, éthyl amines, propyl amines, 2-éthyl-hexyl-oxypropyl amine, 3-éthoxypropyl amine, diisobutyl amine, sec-butyl amine, isopropanol amine, éthanol amines, 2-éthylhexyl amine, éthylène amines, acide acétique et acide formique.

6. Imprimé changeant de couleur selon l'une quelconque des revendications 1 à 5, caractérisé en ce que les encres comprennent des agents changeant de couleur, un alcool polyhydrique et un agent tensio-actif mélangés dans un solvant.

7. Imprimé changeant de couleur selon la revendication 6, caractérisé en ce que l'agent changeant de couleur est un indicateur de pH, et est un agent monocomposant ou un agent mélangé comprenant un ou plusieurs des composés: γ-dinitrophénol, m-nitrophénol, o-nitropnénol, p-nitrophénol, cyanine, α-naphtol phthaléine, phénol phthaléine, crésol phthaléine, thymold phthaléine, acide éthyl bisacétique, pourpre de bromophénol, acide hexaméthoxy et acide heptaméthoxy.

FIG.1(a)

What flower is blooming ?

FIG.1(b)

What flower is blooming ?

TULIP

FIG.2(a)

# FIG.2(b)

What dish is coming out ?

Master Devil is drinking much liquor. What's the color of his face ?

# FIG.2(c)

EP 0 460 270 B1

FIG.3(a)

13

FIG.3(b)